# EUROPÄISCHE PATENTSCHRIFT

(11) **EP 1 702 661 B1**
(45) Veröffentlichungstag und Bekanntmachung des Hinweises auf die Patenterteilung: **21.07.2010**
(21) Anmeldenummer: 06003508.6
(22) Anmeldetag: 21.02.2006
(51) Int. Cl.: B01D 29/15, A01G 25/06, E02B 11/00

(54) **Verfahren zur Wasserreinigung mit einem gestrickten Filter**
Method for purifying water with a knitted filter
Méthode pour purifier l'eau avec un tricot filtrant

(30) Priorität: 21.02.2005 DE 202005002848 U; 13.05.2005 DE 102005023150
(43) Veröffentlichungstag der Anmeldung: 20.09.2006
(73) Patentinhaber: Saupe, Sabine, 06231 Tollwitz (DE)
(72) Erfinder: Saupe, Sabine, 06231 Tollwitz (DE)
(74) Vertreter: Eisenführ, Speiser & Partner

(56) Entgegenhaltungen:
- EP-A- 0 029 713
- EP-A- 0 969 151
- FR-A- 2 340 416
- US-A- 4 538 377
- PATENT ABSTRACTS OF JAPAN Bd. 2000, Nr. 16, 8. Mai 2001 (2001-05-08) -& JP 2001 016973 A (OHBAYASHI CORP), 23. Januar 2001 (2001-01-23)
- PATENT ABSTRACTS OF JAPAN Bd. 1996, Nr. 12, 26. Dezember 1996 (1996-12-26) & JP 08 214697 A (KONOIKE CONSTR LTD), 27. August 1996 (1996-08-27)

## Beschreibung

Die Erfindung betrifft ein Verfahren zur Bewässerung von Pflanzen in einer Freiboderfläche nach dem Oberbegriff des Anspruchs 1.

Verfahren zur Wasserreinigung mit einem Filter und einen Filterstrumpf zur Filterung von Schmutzpartikeln aus einem Fluid, umfassend eine erste schlauchförmige Filterlage aus einem gestrickten Gewebe sind bekannt.

Weiterhin sind Filterstrümpfe dieser Art bekannt. So beschreibt beispielsweise die DE 38 02 037 A1 ein solches Filtergestrick, welches insbesondere für den Bereich der Lebensmitteltechnik, beispielsweise für Fruchtsaftgewinnungsanlagen einzusetzen ist.

Ein wesentlicher Vorteil der bekannten Filterstrümpfe liegt darin, dass durch die Stricktechnik und die verwendbaren Fasermaterialien eine hohe Elastizität des Gewebes erzielt wird, wodurch im Einsatz als Filter eine Selbstreinigungswirkung erreicht wird. Filterstrümpfe der vorgenannten Art können daher in vielen Anwendungen mit geringern Wartungsaufwand eingesetzt werden.

Ein Nachteil der hohen Flexibilität ist, dass der Filterstrumpf dazu neigt, zu kollabieren und folglich der Volumendurchsatz durch den Filter nachteilhaft beeinflusst wird oder gänzlich verhindert wird. Als Maßnahme gegen diesen Nachteil ist es bekannt, Filterstrümpfe mit Stützgerüsten zu verbinden. Dies hat jedoch regelmäßig den Nachteil, dass im Bereich der Kontaktstellen zwischen Stützgerüst und Filterstrumpf ein Verschleiß aufgrund der Bewegung des Filterstrumpfs relativ zum Gerüst auftritt und zudem ein erheblicher konstruktiver Mehraufwand erforderlich ist.Dies ist in einer Reihe von Anwendungen, insbesondere im Bereich der Trinkwasserreinigung in Drittweltändern oder im Bereich der landschaftlichen Entwässerung, landwirtschaftlichen Bewässerung oder ähnlichem erheblich nachteilhaft.

Aus der vorgenannten DE 38 02 037 ist es bekannt, ein Filtergestrick aus einem mono- und multifilen Strang zu stricken, bei dem das Filtergestrick aus einer Mischung aus mono- und multifilen Strängen hergestellt wird. Diese Anordnung kann zwar das Problem des Kollabierens des Filters im gewissen Ausmaß begrenzen, jedoch tritt der Nachteil auf, dass die vorteilhafte Elastizität gestrickter Filter durch die flächig eingebrachten monofilen Stränge weitestgehend reduziert wird und somit die vorteilhafte Selbstreinigungswirkung nicht mehr auftritt.

Es ist weiterhin bekannt, Wasser bei seiner Aufarbeitung, bei der Drainage oder Entsalzung zu filtern, um Grob- oder Feinpartikel aus dem Wasser zu entfernen. Diese Filterung wird üblicherweise mittels weitgehend steifer Filterpatronen durchgeführt, die ein Filtermaterial aus Edelstahl aufweisen. Mit dieser beKannten Filterechnologie werden zwar Partikel bis zu einer bestimmten unteren Partikelgröße aus dem Wasser gefiltert, jedoch liegt ein grundlegendes Problem dieser Filtertechnik darin, dass bei dem Wunsch, auch sehr kleine Partikel aus dem Wasser zu filtern, stets eine sehr schnelle Erhöhung des Filterströmungswiderstands zu beobachten ist, da sich die für solche Feinfilteraufgaben erforderlichen Kleinstporen sehr schnell mit gefiltertem Material zusetzen. Bei bekannten Filtern kann dieses Material durch Rückspülung nur noch bedingt entfernt werden, so dass bekannte Filter regelmäßig ausgetauscht werden müssen.

Es ist weiterhin bekannt, Wasser mittels einer Drainageleitung aus dem Boden zu gewinnen und abzuführen und diese Drainageleitung aus einem mit radialen Öffnungen versehenem Rohr und um das Rohr herum angeordneter Filterlage auszuführen. Eine Ausgestaltung einer solchen Drainageleitung ist in EP 0 029 713 A1 sowie EP 0 969 151 A1 offenbart.

Aus der US-A-4 538 377 ist ein im Boden angeordnetes Bewässerungssystem mit einem Drainagerohr bekannt.

Die FR-A-2 340 416 beschreibt ein Drainagerohr, das zur Bewässerung von Bodenflächen verwendet werden kann.

Der Erfindung lag die Aufgabe zugrunde, ein Verfahren zur Wasserreinigung bereizustellen, bei dem einerseits eine bessere Filterwirkung erzielt wird und andererseits eine wirksame und ökonomische Filterreinigung durchgeführt werden kann.

Diese Aufgabe wird einerseits erfindungsgemäß mittels eines Verfahrens zur Bewässerung von Pflanzen in einer Freibodenfläche, mit den Schritten: Zuführen von Wasser über eine Bewässerungsleitung aus mehreren Bewässerungsöffnungen in einem oberflächennahen Bodenbereich oder oberhalb eines Bodenbereichs, gelöst, bei dem von den Pflanzen nicht aufgenommenes Wasser durch eine im tieferen Bodenbereich unterhalb der Bewässerungsöffnungen und der Pflanzen angeordnete Wasserleitvorrichtung zu zumindest einer Drainageleitung geführt wird, das Wasser über die Drainageleitung aus dem tieferen Bodenbereich zu einer Wassersammelvorrichtung geleitet wird, aus der die Bewässerungsleitung gespeist wird, und innerhalb der Drainageleitung eine schlauchförmige Filterlage aus einem gestrickten Gewebe angeordnet ist, und das Wasser mittels dieser Filterlage von Partikeln gereinigt wird.

Auf diese Weise wird eine besonders günstige Verwertung der insbesondere in wasserarmen Regionen sehr wertvollen Ressource Trinkwasser erzielt. Das erfindungsgemäße Verfahren vermeidet das Versickern von nicht zur Pflanzenaufzucht verwendeten Wassers aus dem Bereich der Pflanzenkultur, sondern führt dieses Wasser stattdessen dem Bewässerungskreislauf über eine Drainageleitung wieder zu. Des weiteren kann das erfindungsgemäße Verfahren Regenwasser, welches in den Bereich der Pflanzenkultur fällt, über die Wasserleitvorridhtung und die Drainageleitung gesammelt werden und in den Bewässerungskreislauf eingefügt werden. Das erfindungsgemäße Verfahren wird mit einer schlauchförmigen Filterlage aus einem gestrickten Gewebe durchgeführt, wodurch eine besonders wirksame Reinigung des durch den Sickervorgang im Bodenbereich stark mit Partikeln belasteten Wassers erreicht wird. Die Filterlage ist als schlauchförmiger Filter oder in anderer geometrischer Form ausgebildet und erzielt den für die Anwendung erforderlichen Idealzustand, einerseits eine Feinsfilterung zur erreichen und andererseits eine einfache Reinigung zu ermöglichen. Die Erfindung basiert dabei auf der Erkenntnis, dass es durch Verwendungeines gestrickten Gewebefilters möglich ist, eine wesentlich feinere Filterung zu erreichen als durch die bekannten Fitter aus Edelstahlmaterial und dass diesegestrickten Gewebefilter es gleichzeitig erlauben, eine besonders wirksame Reinigung durchzuführen und hierbei den Strömungswiderstand des Filters nahezun einen Zustand zu versetzen, der dem Neuzustand des Filters entspricht. Dieser Effekt wird bedingt durch die besonders günstigen elastischen Eigenschaften des gestrickten Filtergewebes, welches - im Gegensatz zum Stand der Technik - nicht auf eine makroskopisch mechanische Reinigungswirkung durch Abstreifen des Filterkuchens oder eine fluiddynamische Reinigung durch Rückspülen oder dergleichen allein vertraut, sondern stattdessen eine mechanische Reinigungswirkung im mikroskopischen Bereich erzielt, die durch mikroskopische Verformungen im Bereich der Filterporen und Filterfilamentstränge erzielt wird, wodurch auch feinste Partikel aus den Poren des Filtergewebes wieder entfernt werden können. Diese Wirkung wird allein durch das Stricken des Filtergewebes erreicht und ermöglicht hierdurch eine Feinstfilterung des Wassers, ohne dass ein Austausch des Filters in regelmäßigen Zeitabständen erforderlich wäre.

Bei dem vorgenannten Verfahren ist es besonders vorteilhaft, wenn die Filterlage in regelmäßigen Zeitabständen oder in Abhängigkeit des Flusswiderstands des Filters oder in Abhängigkeit der Dicke des Filterkuchens umgestülpt wird, und der auf der Schmutzfilterseite aufgebaute Filterkuchen entfernt wird. Zur Ausführung dieser vorteilhaften Verfahrensform kann eine zeitabhängige Steuerung vorgesehen sein, oder eine mittels Sensoren erfolgende Überprüfung des Flusswiderstands oder der Dicke des Filterkuchens vorgesehen sein, um auf diese Weise die Entfernung des Filterkuchens zu steuern bzw. regeln. Dabei wird durch die Möglichkeit, die Filterlage umzustülpen, d.h. die sich bei einem Plattenfilter ergebende Wölbung entgegengesetzt auszugestalten oder die bei einem schlauchförmigen Filter bestehende Geometrie derart umzugestalten, dass die Schlauchinnenseite nacht außen gelangt und die Schlauchaußenseite nach innen, so dass durch diesen Umstülpvorgang die mikroskopische mechanische Reinigungswirkungnerzielt und verstärkt wird. Es ist weiterhin vorteilhaft, wenn der auf der Schmutzfilterseite aufgebaute Filterkuchen in regelmäßigen Zeitabständen oder in Abhängigkeit des Flusswiderstands des Filters durch eine Rückspülung gereinigt wird. Die Rückspülung erzielt in Verbindung mit dem erfindungsgemäßen Einsatz eines gestrickten Filters den vorteilhaften Effekt, dass durch die dabei auftretenden umgekehrten Druckverhältnisse über die Filterlage eine Verformung des gestrickten Filtergewebes erfolgt, die wiederum die mikroskopischen Reinigungseffekte erzielt und verstärkt.

Schlieβlich ist es noch vorteilhaft, wenn die erfindungsgemäßen Verfahren fortgebildet werden, indem während der Rückspülung eine Verschaltung der Wasserleitungsanordnung in einer solchen Weise erfolgt, dass der bei Rückspülung abgeloste Filterkuchen in eine separate Partikel-Sammelkammer geleitet wird. Auf diese Weise wird vermieden, dass das während der Rockspülung entfernte Filterkuchenmaterial sich binnen kurzer Frist wieder am Filter antegen kann, sondern dieses Filterkuchenmaterial wird stattdessen gesammelt und kann entsorgt werden.

Zur Durchführung des erfindungsgemäßen Verfahrens eignet sich insbesondere ein eingangs genannter Filterstrumpf, der eine mit der ersten Filterlage verbundene Drahtverstärkung aufweist.

Der Filterstrumpf hat den Vorteil, dass die Verstärkung nicht durch Einstricken von steifen Fasern erzielt wird, sondern eine zusätzlich Drahtverstärkungslage bereitgestellt ist deren Geometrie und Steifigkeit unabhängig vom Strickgewebe der ersten Filterlage gestaltet werden kann. Auf diese Weise ist es möglich, die Drahtverstärkung so auszubilden, dass zwischen der Drahtverstärkung Abschnitte der ersten Filterlage angeordnet sind, die zwar durch die erzielte Spannwirkung der Drahtverstärkung am Kollabieren gehindert werden, jedoch ihre Eigenelastizität in vollern Umfang behalten und folglich die vorteilhafte Selbstreinigungswirkung weiterhin aufweisen.

Dabei soll unter einer Drahtverstärkung eine Verstärkung aus einem Draht verstanden werden, der einen kreisförmigen, eckigen oder in anderer Weise profilierter Querschnitt aufweisen kann. Der Draht ist vorzugsweise im Querschnitt größer als die Fasern, aus denen die erste Filterlage gestrickt ist. Insbesondere kann vorgesehen sein, dass der Draht der Drahtverstärkung Querschnittsabmessungen abweist; die um den Faktor 5-10 größer sind als die Querschnittsabmessungen der Fasern der ersten Filterlage.

Die Verbindung zwischen der Drahtverstärkung und der ersten Filterlage kann vorzugsweise durch mehrere lokale Verschlaufungen des Drahtes mit der ersten Filterlage erfolgen. Alternativ oder zusätzlich kann der Draht der Drahtverstärkung so angeordnet sein, dass er teilweise innerhalb und teilweise außerhalb der ersten Filterlage angeordnet ist und mittels Durchdringungsstellen mit der ersten Filterlage verbunden ist. Schließlich kann der Draht auch auf andere Weisen, beispielsweise durch Verklebung oder Verklammerung mit der ersten Filterlage verbunden sein.

Es is besonders bevorzugt, dass die erste Filterlage aus einer Kunststofffaser besteht, insbesondere einer Polymerfaser, vorzugsweise Polypropylenfaser oder Aramidfaser. Diese Materialien weisen einerseits eine hohe Beständigkeit gegen eine Reihe von Chemikalien auf und zeichnen sich weiterhin dadurch aus, dass sie gangige Normen im Bereich der Lebensmitteltechnologie erfüllen und folglich im Tinkwasserbereich und im Bereich der Nahrungsmittelindustrie eingesetzt. werden können.

Alternativ hierzu ist es bevorzugt, dass die erste Filterlage aus einer anorganischen Faser besteht, insbesondere einer Glasfaser oder einer Metallfaser, vorzugsweise einer rostfreien Metallfaser. Anorganische Fasern weisen typischerweise sehr hochwertige mechanische Eigenschaften auf und eignen sich daher zur Herstellung von Filterstrümpfen, die für robuste Einsatzzwecke geeignet sind.

Die beiden vorgenannten Fortbildungsformen sind insbesondere in der Hinsicht auch auszuwählen, als dass eine Verbindung zwischen der Drahtverstärkung und der ersten Filterlage in einfacher Weise ausgebildet werden kann. In vielen Anwendangsfällen ist daher bevorzugt, wenn die erste Filterlage und die Drahtverstärkung aus dem gleichen oder einem ähnlichen Material bestehen, um so eine stabile und fertigungstechnisch einfache Verbindung mittels Verschweißung oder Verklebung erzielen zu können.

Es ist weiterhin insbesondere bevorzugt, wenn die Drahtverstärkung spiralförmig ist. Diese Ausführungsform ermöglicht eine sichere Verstärkung gegen Kollabieren des Filterstrumpfes und ermöglicht dabei eine an verschiedene Einsatzzwecke angepasste Steifigkeit des gesamten Filterstrumpfes, indem die Steigung der spiralförmigen Drahtverstärkung für besonders kollabiersichere Filterstrümpfe sehr gering gewählt wird und für Filterstrümpfe mit größeren elastischen Bereichen zwischen den einzelnen Drahtverstärkungen steiler gewählt wird.

Die Drahtverstärkung kann wahlweise auf der Innenseite oder auf der Außenseite der ersten Filterlage angeordnet sein. Zudem ist es in einigen Anwendungsfällen auch vorteilhaft, die Drahtverstärkung beidseits anzuordnen, um auf diese Weise einen besonders stabilen Filterstrumpf zu erzielen.

Es ist besonders bevorzugt, dass die Drahtverstärkung aus einem metallischen Werkstoff, insbesondere aus einem rostfreien Edelstahl besteht. Durch diese Materialwahl wird einerseits eine ausreichende Festigkeit der Drahtverstärkung bereitgestellt und andererseits eine insgesamte Elastizität des Filterstrumpfes erhalten. Die Drahtverstärkung aus metallischern Werkstoff eignet sich sowohl in der Verwendung mit einer ersten Filterlage aus Kunststofffaser oder einer anderen nicht metallischen Faser als auch in der bevorzugten Kombination mit einer Metallfaser, die besonders vorteilhafte Möglichkeiten der Befestigung der Drahtverstärkung an der ersten Filterlage bereitstellt.

Es ist insbesondere bevorzugt, dass die Drahtverstärkung an mehreren Stellen an der ersten Filterlage befestigt ist, insbesondere mittels Gewebeschlaufen der erster Filterlage, welche den Draht der Drahtverstärkung umschließen.

So kann der Draht an der Filterlage befestigt werden, indem die Filterlage umgebördelt wird und den Draht dann von innen und außen überdeckt und nächfolgend an mehreren, vorzugsweise vier Punkten der Draht mittels durch die beiden Filterlagen gestochenen und um den Draht geführten Gamschlaufen befestigt wird. Dieses Befestigungsverfahren eignet sich insbesondere für die beiden Enden eines Filterschlauchs, kann aber auch in den übrigen Bereichen angewendet werden. Bei dieser Ausgestaltung kann eine stoffschlüssige Verbindung zwischen Drahtverstärkung und erster Filterlage vermieden werden und auf diese Weise eine geringfügige relative Beweglichkeit zwischen Drahtverstärkung und ersten Filterlage ermöglicht werden. Dies hat in vielen Anwendungsfällen den Vortell, dass lokale Spannungsspitzen in der ersten Filterlage verhindert werden können und eine vorteilhafte Beweglichkeit der ersten Filterlage erhalten bleibt, die den Selbstreinigungseffekt verstärkt.

Bevorzugte Ausführungsformen der Erfindung werden anhand der anhängen Figuren beschrieben. Es zeigen:
- Figur 1:: Eine schematische, teilgeschnittene Darstellung eines Filter- strumpfs mit spiralförmiger Drahtverstärkung,
- Figur 2:: Eine schematische Darstellung einer Filtervorrichtung im Einsatz in einem Brunnenschacht, und
- Figur 3:: Den schematischen Ablauf einer Bewässerung einer Pflanzenkultur.

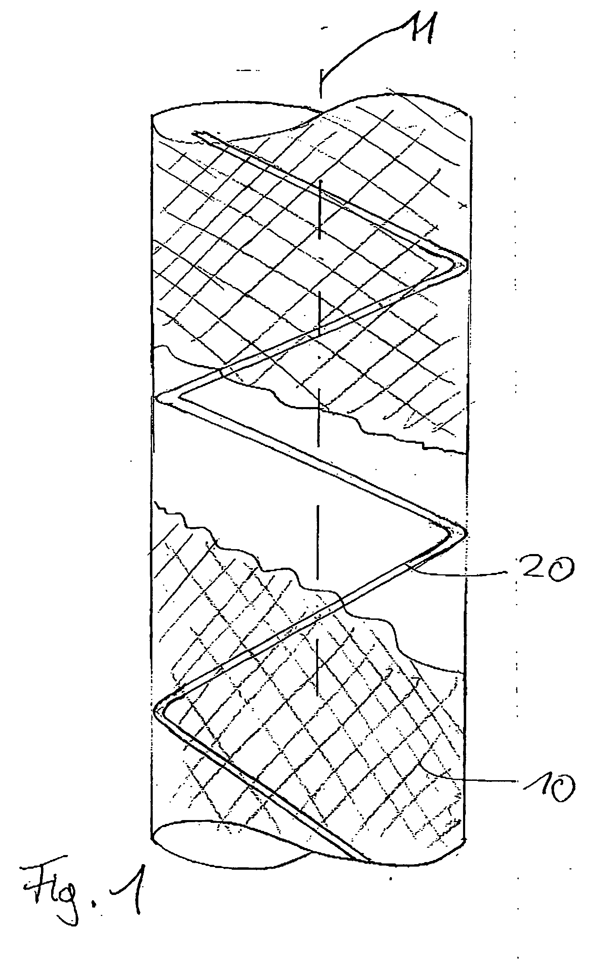

Bezugnehmend auf Figur 1 weist ein Filterstrumpf eine erste Filterlage 10 auf, die durch, eine spiralförmige Drahtverstärkung 20 verstärkt wird. Die spiralförmige Drahtwerstärkung 20 erstreckt sich in Form einer Wendel entlang der Längsachse 11 des Filterstrumpfes und verläuft im gezeigten Ausführungsbeispiel auf der Innenseite der ersten Filterlage.

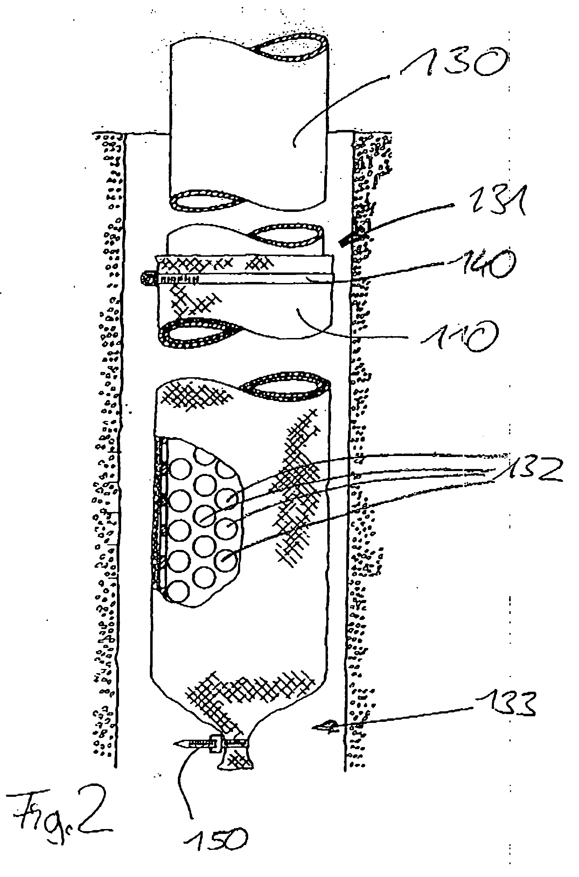

Bezugnehmend auf Figur 2 umfasst eine Filtervorrichtung, einen Filteritrumpf 110 und ein Hohlprofil in Form eines Rohres 130.

Der Filterstrumpf 110 ist einem Bereich 131 des Rohres 130 auf der Umfangsfläche des Rohres mittels einer Rohrschelle 140 kraftschlüssig befestigt.

In der Wandung des Rohres 130 sind, wie im ausgeschnitten dargestellten Bereich der Figur 1 erkennbar, eine Vielzahl von Radialbohrungen 132 ausgebildet, durch die das gefilterte Fluid in das Innere des Rohres 130 eintreten kann.

Am unteren Ende 133 erstreckt sich der Filterstrumpf über das axiale Ende des Rohres 130 hinaus. Der Filterstrumpf ist in diesem Bereich zusammengeführt und mittels eines kabelbinders 150 fluiddicht verschnürt, sodass kein Fluid in das Innere des Filterstrumpfes eintreten kann, ohne durch die erste Filterlage hindurchzutreten.

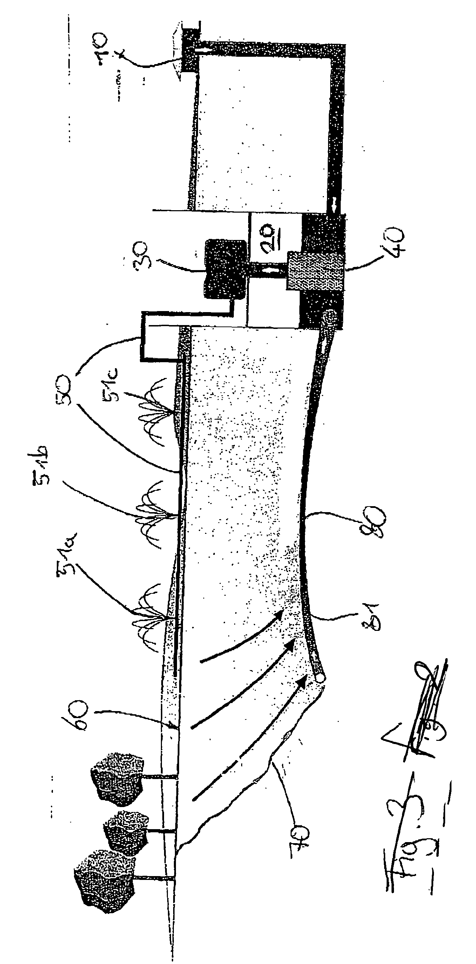

Figur 3 zeigt den Verfahrensablauf der Bewässerung einer Pflanzenkultur in wasserarmen Regionen.

Aus einer Meerwasserentsalzungsanlage 10 wird einer Zisterne 20 zur Pflanzenbewässerung geeignetes Wasser zugeführt. Das Wasser wird mittels einer Saugpumpe 30 durch einen Filter 40 abgezogen und einer Bewässerungsleitungsanordnung 50 zugeführt, aus der es aus mehreren Öffnungen 51a-c oberhalb der Bodenfläche 60 als Sprühbewässerung abgegeben wird.

Unterhalb der Bodenfläche 60 ist eine Wasserleitungs- und Sammelanordnung in Form einer im Bodenbereich angeordneten, wasserdichten Plane 70 ausgebildet, die so angeordnet ist, dass sie an ihr in Schwerkraftrichtung entlangfließendes Wasser zu einer Drainageleitung 80 leitet.

In der Drainageleitung 80 ist ein schlauchförmiger, gestrickter Filter 81 angeordnet. Die Drainageleitung 80 verfügt über eine Vielzahl großer radialer Öffnungen, durch die das Wasser in die Drainageleitung eindringen kann. Das so eingedrungene Wasser wird durch den Filterstrumpf innerhalb der Drainageleitung gefiltert und über den Innenraum des Filterstrumpfs der Zisterne 20 wieder zugeführt.

## Patentansprüche

1. Verfahren zur Bewässerung von Pflanzen in einer Freibodenfläche,
mit den Schritten:
Zuführen von Wasser über eine Bewässerungsleitung (50) aus mehreren Bewässerungsöffnungen (51a-c) in einem oberflächennahen Bodenbereich oder oberhalb eines Bodenbereichs (60), wobei
von den Pflanzen nicht aufgenommenes Wasser durch eine im tieferen Bodenbereich unterhalb der Bewässerungsöffnungen (51a-c) und der Pflanzen angeordnete Wasserleitvorrichtung (70) zu zumindest einer Drainageleitung (80) geführt wird,
das Wasser über die rainageleitung (80) aus dem tieferen Bodenbereich zu einer Wässersammelvorrichtung (20) geleitet wird, aus der die Bewässerungsleitung (50) gespeist wird,
**dadurch gekennzeichnet, dass**
innerhalb der Drainageleitung (80) eine schlauchförmige Filterlage (81) aus einem gestnickten Gewebe angeordnet ist, und das Wasser mittels dieser Filterlage (81) von Partikeln gereinigt wird.

2. Verfahren nach Anspruch 1,
**dadurch gekennzeichnet, dass** die Filterlage (81) in regelmäßigen Zeitabständen oder in Abhängigkeit des Flusswiderstands des Filters oder in Abhängigkeit der Dicke des Filterkuchens umgestülpt wird, und der auf der Schmutzfilterseite aufgebaute Filterkuchen entfernt wird.

3. Verfahren nach Anspruch 1 oder 2,
**dadurch gekennzeichnet, dass** der auf der Schmutzfilterseite aufgebaute Filterkuchen in regelmäßigen Zeitabständen oder in Abhängigkeit des Flusswiderstandis des Filters durch eine Rückspülung gereinigt wird.

4. Verfahren nach einem der vorhergehenden Ansprüche,
**dadurch gekennzeichnet, dass** während der Rückspülung eine Verschaltung der Wasserlungsanordnung in einer solchen Weise erfolgt, dass der bei Rückspülung abgelöste Filterkuchen in eine separate Partikel-Sammelkammer geleitet wird.

## Claims

1. Method of irrigating plants in open ground, comprising the steps of:
- feeding water from several irrigation openings (51a-c) in a region close to the surface of the ground or a region above the ground (60) through an irrigation pipe (50), whereby
- water not absorbed by the plants is fed via a water conduit system (70) disposed deeper in the ground underneath the irrigation openings (51a-c) and plants to at least one drainage pipe (80),
- the water is directed out of the deeper ground through the drainage pipe (80) to a water collection device (20) from which the irrigation pipe (50) is supplied, **characterised in that**
- a tubular filter layer (81) made from a knitted fabric is disposed inside the drainage pipe (80) and particles are removed from the water by means of this filter layer (81).

2. Method as claimed in claim 1,
**characterised in that** the filter layer (81) is turned inside out at regular intervals or as a function of the flow resistance of the filter or as a function of the thickness of the filter cake and the filter cake which has accumulated on the dirt side of the filter is removed.

3. Method as claimed in claim 1 or 2,
**characterised in that** the filter cake which has accumulated on the dirt side of the filter is cleaned by back flushing at regular intervals or as a function of the flow resistance of the filter.

4. Method as claimed in one of the preceding claims, **characterised in that**, during back flushing, the water conduit system is connected so that the filter cake detached by back flushing is directed into a separate particle collection chamber.

## Revendications

1. Procédé pour l'irrigation de plantes sur une surface de sol libre, avec les étapes :
- alimentation d'eau par une conduite d'irrigation (50) à partir de plusieurs ouvertures d'irrigation (51 a-c) dans une portion de sol à proximité de la surface ou au-dessus d'une portion de sol (60), sachant que
- l'eau non retenue par les plantes est conduite par une installation de conduites d'eau (70) disposée en profondeur dans la portion de sol en dessous des ouvertures d'irrigation (51 a-c) et des plantes vers au moins une conduite de drainage (80),
- l'eau est conduite par l'intermédiaire de la conduite de drainage (80) à partir des profondeurs de la portion de sol vers une installation de collecte de l'eau (20), à partir de laquelle est alimentée la conduite d'irrigation (50),
**caractérisé en ce que**
- à l'intérieur de la conduite de drainage (80) est disposée une couche filtrante (81) en forme de tuyau flexible à partir d'un tissu tricoté, et l'eau est débarrassée de particules au moyen de cette couche filtrante (81).

2. Procédé selon la revendication 1, **caractérisé en ce que** la couche filtrante (81) est retroussée à intervalles réguliers ou en fonction de la résistance de courant du filtre ou en fonction de l'épaisseur du gâteau, et le gâteau formé sur la face encrassée du filtre est éliminé.

3. Procédé selon la revendication 1 ou 2, **caractérisé en ce que** le gâteau formé sur la face encrassée du filtre est nettoyé à intervalles réguliers ou en fonction de la résistance de courant du filtre par un rinçage à contre-courant.

4. Procédé selon l'une quelconque des revendications précédentes, **caractérisé en ce que**, pendant le rinçage à contre-courant, se produit une commutation de l'installation de conduites d'eau de manière à ce que, lors du rinçage à contre-courant, le gâteau qui s'est détaché, est conduit dans une cuve de collecte séparée pour particules.
